Europäisches Patentamt

European Patent Office

Office européen des brevets

(19)

(11) **EP 1 298 453 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
*G01S 17/89* (2006.01)     *G01S 17/93* (2006.01)
*G01S 17/66* (2006.01)

(21) Anmeldenummer: **02021118.1**

(22) Anmeldetag: **23.09.2002**

(54) **Verfahren zur Erkennung und Verfolgung von Objekten**

Method for recognising and tracking objects

Procédé de reconnaissance et de suivi d'objets

(84) Benannte Vertragsstaaten:
**AT BE BG CH CY CZ DE DK EE ES FI FR GB GR IE IT LI LU MC NL PT SE SK TR**

(30) Priorität: **28.09.2001 DE 10148069**

(43) Veröffentlichungstag der Anmeldung:
**02.04.2003 Patentblatt 2003/14**

(73) Patentinhaber: **IBEO Automobile Sensor GmbH**
**22179 Hamburg (DE)**

(72) Erfinder: **Lages, Ulrich, Dr.**
**21031 Hamburg (DE)**

(74) Vertreter: **Manitz, Finsterwald & Partner GbR**
**Postfach 31 02 20**
**80102 München (DE)**

(56) Entgegenhaltungen:
**EP-A- 0 913 751        EP-A- 1 014 109**
**WO-A-98/09844        DE-A- 19 845 568**
**US-A- 4 715 031        US-A- 5 046 041**

- EWALD A ET AL: "Laser scanners for obstacle detection in automotive applications" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA, IEEE, US, 3. Oktober 2000 (2000-10-03), Seiten 682-687, XP010529017 ISBN: 0-7803-6363-9
- KUNERT M: "Radarbasierte Nahfeldsensorik zur Precrash Sensierung" INNOVATIVER KFZ-INSASSEN- UND PARTNERSCHUTZ. TAGUNG BERLIN, SEPT. 30 - OKT. 1, 1999, VDI BERICHTE 1471, DUESSELDORF: VDI VERLAG GMBH, DE, Bd. 471, 30. September 1999 (1999-09-30), Seiten 169-185, XP002203526 ISBN: 3-18-091471-8

EP 1 298 453 B1

**Beschreibung**

Die vorliegende Erfindung betrifft ein Verfahren zur Erkennung und Verfolgung von Objekten auf der Basis von Bildern von Gegenständen in einem Sichtbereich wenigstens eines, insbesondere an einem Fahrzeug angeordneten, Sensors zur Erfassung elektromagnetischer Strahlung, insbesondere eines Laserscanners, bei dem den Objekten zugeordnete Objektdatensätze an eine Datenverarbeitungs- und/oder Speichereinrichtung ausgegeben werden.

Objekterkennungs- und -verfolgungsverfahren der oben genannten Art sind grundsätzlich bekannt. Es ist vorgeschlagen worden, solche Verfahren im Fahrzeugbereich einzusetzen, um den Bereich vor dem Fahrzeug automatisch zu überwachen und beispielsweise bei Auftreten von Objekten, die die Fahrt des Fahrzeugs gefährden könnten, etwa eines stehenden oder sich bewegenden Hindernisses auf der Fahrbahn, Warnungen an den Fahrer auszugeben oder sogar eine automatische Reaktion des Fahrzeugs auszulösen. Hierzu ist es denkbar, daß ein Objekterkennungs- und -verfolgungsverfahren der oben genannten Art in einer Datenverarbeitungseinrichtung durchgeführt wird, die Teil des Sensors oder mit diesem verbunden ist und nur der Objekterkennung- und -verfolgung dient. Diese Einrichtung müßte dann erkannten Objekten zugeordnete Objektdatensätze an eine weitere Speicher- und/oder Datenverarbeitungseinrichtung ausgeben, die diese im Hinblick auf die Fahrsituation und insbesondere eine Gefährdung des Fahrzeugs hin auswertet und entsprechende Maßnahmen einleitet. Insbesondere im Hinblick auf eine Reaktion bei einer Gefährdung des Fahrzeugs ist dabei eine sehr schnelle Reaktion erforderlich.

Bei den in einem Fahrzeug zu diesem Zweck verfügbaren Datenverbindungen, beispielsweise einem CAN-Bus, ist die Bandbreite der Datenübertragung jedoch relativ gering, wenn man sie mit der vergleichsweise großen Anzahl von möglicherweise zu übertragenden Objektdatensätzen vergleicht. Denn bei einer typischen Fahrsituation, insbesondere in gefährlichen Situationen, wie z. B. zäh fließendem Verkehr, wird eine vergleichsweise große Anzahl von Objekten erkannt, so daß eine große Anzahl von Objektdatensätzen ausgegeben werden muß, was bei der geringen Bandbreite der Übertragung eine verglichen mit der notwendigen Reaktionszeit nicht unerhebliche Übertragungszeit beansprucht.

Es ist denkbar, bei einer Ausgabe der Objektdatensätze zuerst die in bezug auf ein vorgegebenes Priorisierungskriterium wichtigsten Objekte auszugeben. Diese Lösung weist jedoch nicht die Flexibilität auf, die bedingt durch die Vielzahl möglicher unterschiedlicher Fahrsituationen, in denen jeweils andere Eigenschaften von Objekten wichtig sind, erforderlich ist.

Es ist Aufgabe der vorliegenden Erfindung, ein Verfahren der oben genannten Art anzugeben, das eine günstige Ausgabe von Objektdatensätzen auch in unterschiedlichen Fahrsituationen erlaubt.

Der Artikel "Object Detection with Laser Scanners for Automotive Applications", A. Ewald und V. Willhoeft, IFAC Control in Transportation Systems, Braunschweig, Germany, 2000, der Artikel "Laser Scanners for Automotive Applications in the AF Project", V. Willhoeft, 7th World Congress on IST, 2000, Turin, Italien, sowie der Artikel "Laser Scanners for Obstacle Detection in Automotive Applications", A. Ewald und V. Willhoeft, Proceedings of the IEEE Intelligent Vehicles Symposium 2000, Dearborn, MI, USA, beschreiben jeweils ein Verfahren, bei dem für ein einziges vorgegebenes Priorisierungskriterium, beispielsweise den radialen Abstand vom Sensor oder die Zeit bis zu einer Kollision, einzelne Objektdatensätze bis zu einer maximalen Gesamtzahl ausschließlich in einer allein dieses Priorisierungskriterium berücksichtigenden Reihenfolge ausgegeben werden.

Die Aufgabe wird nach einer ersten Alternative gelöst durch ein gattungsgemäßes Verfahren, das sich dadurch auszeichnet, daß nur eines von mehreren Priorisierungskriterien, die Eigenschaften der Objekte betreffen, durch Setzen eines Priorisierungsparameters gewählt wird und eine dem Priorisierungskriterium entsprechende, durch einen weiteren Priorisierungsparameter bestimmte maximale Gesamtanzahl von Objektdatensätzen ausgegeben wird, die durch das gewählte Priorisierungskriterium bestimmt sind.

Unter Priorisierungskriterium wird im folgenden insbesondere eine Bewertungsfunktion verstanden, mit der einem Objekt in Abhängigkeit von mindestens einer Eigenschaft des Objekts ein Zahlenwert zugeordnet werden kann, wobei die Rangfolge der Objekte für dieses Priorisierungskriterium entweder entsprechend einer aufsteigenden oder einer abfallenden Folge von Werten festgelegt werden kann. Insbesondere kann ein Priorisierungskriterium nur durch den Wert eines dem Objekt zugeordneten Parameters bzw. einer Eigenschaft des Objekts, beispielsweise seines Abstands von dem Sensor, gegeben sein. Weiterhin kann es sich bei der Eigenschaft um eine beliebige dem Objekt zugeordnete Größe handeln, die aus bei der Objekterkennung und Verfolgung ermittelten Objektdaten bestimmbar ist.

Das Priorisierungskriterium kann gleichzeitig eine Ausschlußfunktion in dem Sinn umfassen, daß nach dem Priorisierungskriterium gewisse Objektdatensätze von der Priorisierung und Ausgabe ausgeschlossen werden. Wird beispielsweise der Abstand von dem Sensor als Kriterium verwendet, so können Objekte, die weiter als ein maximaler Abstand entfernt sind, generell von der Ausgabe ausgeschlossen werden.

Ein Priorisierungskriterium selbst, das heißt genauer die Bewertungsfunktion, wird in der Regel durch eine oder mehrere Anwendungen bestimmt, die die ausgegebenen Objektdatensätze verwendet.

Bei der Ausgabe wird maximal die Gesamtzahl von Objektdatensätzen ausgegeben, die in der Rangfolge am höchsten eingeordnet sind. Sind weniger Objektdatensätzen vorhanden, werden alle Objektdatensätze ausgegeben, die dem Priorisierungskriterium entsprechen.

Durch weitere Priorisierungsparameter kann die maximale Anzahl der auszugebenden Objektdatensätze für jedes Priorisierungskriterium getrennt angegeben werden. Dabei kann die maximale Anzahl für alle Priorisierungskriterien gleich sein kann, so daß nur ein weiterer Priorisierungsparameter für alle Priorisierungskriterien verwendet werden kann. Dieser kann dann insbesondere allein durch die für eine Ausgabe zur Verfügung stehende Zeit und die maximale Datenübertragungsgeschwindigkeit für einen Objektdatensatz gegeben sein.

Mit dem Verfahren nach der ersten Alternative ist während des Verfahrens durch Änderung des Priorisierungsparamters, dessen Wert beispielsweise ein beliebiges Kennzeichen für das entsprechende Priorisierungskriterium sein kann, ein Wechsel zwischen den vorgesehenen mehreren Priorisierungskriterien möglich, wodurch eine Reaktion auf verschiedene Anforderungen und damit eine erhöhte Flexibilität ermöglicht wird. Insbesondere kann bei einem Einsatz im Zusammenhang mit einem an einem Fahrzeug angebrachten Sensor bei einem Wechsel der Fahrsituation ein Wechsel des Priorisierungskriteriums vorgenommen werden. Damit können durch Wahl des Priorisierungskriteriums in Abhängigkeit von einer gegebenen Anwendung die relevantesten Objektdatensätze ausgegeben werden.

Die Aufgabe wird in einer zweiten Alternative durch ein gattungsgemäßes Verfahren mit den Merkmalen des kennzeichnenden Teils des Anspruchs 1 gelöst.

Die Aufgabe wird auch durch ein gattungsgemäßes Verfahren mit den Merkmalen des kennzeichnenden Teils des Anspruchs 2 gelöst.

Das erfindungsgemäße Verfahren nach der zweiten Alternative ist dadurch gekennzeichnet, daß in Abhängigkeit von mindestens zwei Priorisierungskriterien, die jeweils mindestens eine Eigenschaft der Objekte betreffen, und von einem oder mehreren Priorisierungsparametern Objektdatensätze, die wenigstens einem der Priorisierungskriterien entsprechen, ausgegeben werden.

In bezug auf die Priorisierungskriterien gelten die gleichen Ausführungen wie bei dem Verfahren nach der ersten Alternative.

Mittels der Priorisierungsparameter können die Priorisierungskriterien parametrisiert und/oder weitere Eigenschaften der Ausgabe, insbesondere die relative Bedeutung der Priorisierungskriterien zueinander, bestimmt werden.

Mit dem erfindungsgemäßen Verfahren nach der zweiten Alternative ist es daher möglich, für verschiedene Anwendungen Priorisierungskriterien und Priorisierungsparameter festzulegen, so daß bei einer Ausgabe die für die Anwendungen jeweils die relevantesten Objektdatensätze ausgegeben werden können. Dies ermöglicht eine besonders flexible Reaktion bei wechselnden Fahrsituationen.

Für viele Fälle ist es von Vorteil, daß zu Beginn der Ausgabe bereits bekannt ist, wieviele Objektdatensätze ausgegeben bzw. von einer anderen Applikation eingelesen werden sollen. Insbesondere kann dadurch sichergestellt werden, daß tatsächlich nicht mehr Objektdatensätze ausgegeben werden sollen, als aufgrund der für die Ausgabe maximal zur Verfügung stehenden Zeit und der für die Übertragung eines Objektdatensatzes notwendigen Zeit möglich ist. Es ist daher bevorzugt, daß Priorisierungsparameter benutzt werden, aus denen die maximale Gesamtzahl der bei einer Ausgabe auszugebenden Objektdatensätze und für jedes der Priorisierungskriterien eine maximale Anzahl der bei der Ausgabe auszugebenden, dem jeweiligen Priorisierungskriterium entsprechenden Objektdatensätze ermittelbar sind. Hierzu können beispielsweise für jedes der Priorisierungskriterien maximale Anzahlen von auszugebenden Objekten als Priorisierungsparameter gewählt werden, aus denen sich die maximale Gesamtzahl der auszugebenden Parameter durch Addition berechnen läßt. Es ist besonders bevorzugt, eine maximale Gesamtzahl der auszugebenden Objektdatensätze und für die Priorisierungskriterien Gewichtungsfaktoren anzugeben. Für ein Priorisierungskriterium kann der Gewichtungsparameter entfallen, wenn er aus den Gewichtungsfaktoren für die anderen Priorisierungskriterien berechenbar ist. Dies ist beispielsweise der Fall, wenn die Gewichtungsfaktoren auf Eins normiert sind. Die maximale Anzahl der für ein Priorisierungskriterium auszugebenden Objektdatensätze ergibt sich dann durch Multiplikation der maximalen Gesamtzahl und der auf Eins normierten Gewichtungsfaktoren.

Grundsätzlich ist es möglich, daß ein Objektdatensatz entsprechend mehrerer Priorisierungskriterien auszugeben wäre. Dies würde in vielen Fällen jedoch ein Vergeudung von Datenübertragungskapazität bedeuten.

Es ist daher bevorzugt, daß ein Objektdatensatz, der gemäß mindestens zwei der Priorisierungskriterien auszugeben wäre, nur einmal ausgegeben wird.

Grundsätzlich können die den Priorisierungskriterien entsprechenden Objektdatensätze in beliebiger Reihenfolge ausgegeben werden.

Für viele Anwendungen ist es aber wichtig, festzustellen, nach welchem Priorisierungskriterium ein Objektdatensatz zur Ausgabe gekommen ist. Bei den Verfahren nach beiden Alternativen ist es daher bevorzugt, daß einem auszugebenden Objektdatensatz mindestens ein Datenelement zugeordnet wird, das ebenfalls ausgegeben wird und das Priorisierungskriterium oder die Priorisierungskriterien kennzeichnet, nach dem bzw. denen der Objektdatensatz auszugeben ist. Dadurch kann unabhängig von der Reihenfolge der Ausgabe und insbesondere auch bei nur einfacher Ausgabe eines eigentlich mehrfach auszugebenden Objektdatensatzes leicht festgestellt werden, entsprechend welchem Kriterium der Objektdatensatz auszugeben war. Dies ermöglicht es einer folgenden, die ausgegebenen Objektdatensätze verwendenden Applikation, diese selektiver und damit effektiver zu verarbeiten.

Insbesondere im Hinblick auf sehr zeitkritische Anwendungen ist es bei den Verfahren nach beiden Alternativen weiterhin bevorzugt, daß die Objektdatensätze in einer Ausgabereihenfolge ausgegeben werden, die von dem oder den Priorisierungskriterien abhängt. Insbesondere ist es möglich, Objekte, die besonders relevant sind, zuerst auszugeben, so daß diese auch zuerst vollständig verfügbar sind.

Bei dem erfindungsgemäßen Verfahren nach der zweiten Alternative ist es weiter besonders bevorzugt, daß durch wenigstens einen Priorisierungsparameter den Priorisierungskriterien eine Rangfolge zugeordnet ist und daß bei einer Ausgabe in der Rangfolge der Priorisierungskriterien für jedes der Priorisierungskriterien die entsprechenden Objektdatensätze ausgegeben werden. Dies ermöglicht es, ein wichtigstes Priorisierungskriterium anzugeben, so daß die diesem Kriterium entsprechenden Objektdatensätze zuerst ausgegeben und von einer folgenden Applikation verarbeitet werden können. Hierbei können die Objektdatensätze für ein Kriterium besonders vorteilhaft, wie oben beschrieben, entsprechend ihrer Priorität ausgegeben werden.

Für andere Anwendungen kann es jedoch wichtig sein, frühzeitig eine Szene, beispielsweise eine Fahrsituation, nach mehreren Kriterien zu beurteilen. Es ist daher bei dem erfindungsgemäßen Verfahren nach der zweiten Alternative bevorzugt, daß durch wenigstens einen Priorisierungsparameter den Priorisierungskriterien eine Rangfolge zugeordnet ist und daß bei einer Ausgabe die Objektdatensätze in Blöcken ausgegeben werden, die jeweils Objektdatensätze enthalten, die gemäß den verschiedenen Priorisierungskriterien die gleiche Priorität bei der Ausgabe haben. Besonders bevorzugt ist es dabei, daß durch wenigstens einen Priorisierungsparameter den Priorisierungskriterien eine Rangfolge zugeordnet ist und die Objektdatensätze eines Blocks entsprechend der Rangfolge geordnet sind. Hierdurch wird sichergestellt, daß grundsätzlich die relevantesten Objektdatensätze in bezug auf alle verwendeten Priorisierungskriterien zuerst für eine Anwendung verfügbar sind.

Besonders bevorzugt können die Priorisierungsparameter einen Parameter für den Ausgabemodus enthalten, durch den der Ausgabemodus nach den beiden gerade beschriebenen Ausgabemodi bestimmbar ist.

Nach einer weiteren Alternative wird die Aufgabe gelöst durch ein gattungsgemäßes Verfahren mit den Merkmalen des kennzeichnenden Teils des Anspruchs 8.

Das gattungsgemäße Verfahren gemäß der Erfindung ist dadurch gekennzeichnet, daß mindestens zwei Priorisierungskriterien vorgesehen sind, die jeweils mindestens eine aus Eigenschaften der Objekte ermittelbare Priorisierungsgröße betreffen, daß für jedes der Priorisierungskriterien wenigstens ein Priorisierungsparameter zur Normierung vorgesehen ist, der einen Grenzwert eines Wertebereichs für die Priorisierungsgröße angibt, daß für jedes der Priorisierungskriterien die Objektdatensätze priorisiert werden und jedem der Objektdatensätze in Abhängigkeit von dem Wert der Priorisierungsgröße ein Priorisierungswert zugeordnet wird, wobei die Priorisierungswerte von Objektdatensätzen bezüglich eines Priorisierungskriteriums, deren Werte der entsprechenden Priorisierungsgrößen in dem Wertebereich liegen, entsprechend dem Priorisierungskriterium auf Werte zwischen 0 und einer für alle Priorisierungskriterien gleich gewählten Konstante normiert werden, und den anderen Objektdatensätzen ein Priorisierungswert von 0 zugeordnet wird, daß für jeden Objektdatensatz ein kombinierter Priorisierungswert, in den durch mindestens einen Priorisierungsparameter gewichtete Priorisierungwerte für die Priorisierungskriterien eingehen, bevorzugt als mit mindestens einem Priorisierungsparameter gewichteter Mittelwert der Priorisierungwerte für die Priorisierungskriterien, ermittelt wird, und daß die Objektdatensätze entsprechend dem kombinierten Priorisierungswert ausgegeben werden.

Grundsätzlich kann der Wertebereich für die Priorisierungsgröße in einer Richtung unbeschränkt oder durch ein nicht veränderliche Konstante gegeben sein, die daher keinen Priorisierungsparameter darstellt.

Der Wertebereich kann jedoch auch durch zwei, durch entsprechende Priorisierungsparameter gegebene Grenzwerte eingeschlossen sein.

In bezug auf die Priorisierungskriterien gelten die gleichen Ausführungen wie bei dem Verfahren nach der ersten Alternative.

Hierdurch kann sehr einfach und effektiv eine Priorisierung unter Berücksichtigung mehrerer Kriterien erfolgen. Weiterhin kann durch Wahl des Priorisierungsparameters zur Normierung leicht festgelegt werden, wie die Anzahl der auszugebenden Objekte bestimmt werden soll.

Nach einer vierten Alternative wird die Aufgabe gelöst durch ein gattungsgemäßes Verfahren mit den Merkmalen des kennzeichnenden Teils des Anspruchs 9.

Das gattungsgemäße Verfahren gemäß der Erfindung ist dadurch gekennzeichnet, daß mindestens zwei Priorisierungskriterien vorgesehen sind, die jeweils mindestens eine Eigenschaft der Objektdatensätze betreffen, daß die Objektdatensätze nach jedem der Priorisierungskriterien unter Bildung entsprechender Priorisierungswerte priorisiert werden, daß für jeden Objektdatensatz eine getrennte Bewertung für jedes der Priorisierungskriterien erfolgt, und für jedes Priorisierungskriterium eine entsprechende Liste erstellt wird, und daß die Objektdatensätze als erstes ausgegeben werden, die in jeder der Listen eine hohe Priorität einnehmen, und danach in einer durch Parametrisierungsparamter vorgebenen Reihenfolge der Priorisierungskriterien für jedes der Priorisierungskriterien die noch nicht ausgegebenen Objektdatensätze, die bezüglich des jeweiligen Priorisierungskriteriums einen hohen Wert erhalten haben.

In bezug auf die Priorisierungskriterien gelten die gleichen Ausführungen wie bei dem Verfahren nach der ersten Alternative.

Hierdurch kann sichergestellt werden, daß die Objektdatensätze, die nach den Priorisierungskriterien am wichtigsten sind, zuerst ausgegeben werden.

Dabei ist es bevorzugt, daß für jeden Objektdatensatz die Position in den Listen ausgegeben wird. Eine nachfolgende Applikation kann dann leicht ermitteln, welche Priorität ein Objektdatensatz bezüglich eines der Priorisierungskriterien gehabt hat, und diese Information dementsprechend verwerten.

Weiterhin ist es bevorzugt, daß für jedes der Priorisierungskriterien wenigstens ein Priorisierungsparameter zur Normierung vorgesehen ist, der einen Grenzwert eines Wertebereichs für die Priorisierungsgröße angibt, und daß zur Bewertung für eines der Priorisierungskriterien jedem der Objektdatensätze in Abhängigkeit von dem Wert der entsprechenden Priorisierungsgröße ein Priorisierungswert zugeordnet wird, wobei die Priorisierungswerte von Objektdatensätzen bezüglich eines Priorisierungskriteriums, deren Werte der entsprechenden Priorisierungsgrößen in dem Wertebereich liegen, entsprechend dem Priorisierungskriterium auf Werte zwischen 0 und einer für alle Priorisierungskriterien gleich gewählten Konstante normiert werden, und den anderen Objektdatensätzen ein Priorisierungswert von 0 zugeordnet wird, und daß nur Objektdatensätze mit einem Priorisierungswert oberhalb eines durch einen weiteren Priorisierungsparameter gegebenen Schwellwerts ausgegeben werden.

Hierdurch ist wiederum eine Auswahl der auszugebenden Objektdatensätze entsprechend vorgegebener Grenzwerte möglich.

Die folgenden Weiterbildungen und Ausführungsformen beziehen sich auf die vorstehenden alternativen erfindungsgemäßen Verfahren.

Grundsätzlich können die Priorisierungsparameter zu Beginn des Verfahrens bestimmt bzw. festgelegt werden. Damit läge aber die Ausgabereihenfolge für den Rest des Verfahrens fest. Es ist daher bevorzugt, daß wenigstens einer der Priorisierungsparameter während des Ablaufs des Verfahrens geändert wird. Hierdurch ist es möglich, die Ausgabe, insbesondere die maximale Gesamtzahl auszugebender Objektdatensätze, sowie bei dem erfindungsgemäßen Verfahren nach der zweiten Alternative die Gewichtung der Kriterien, den Ausgabemodus oder die Ausgabereihenfolge, durch Änderung der Priorisierungsparameter auch wechselnden Fahrsituationen und/oder unterschiedlichen Applikationen noch besser anzupassen. Ein solcher Wechsel erscheint insbesondere bei einer tiefgreifenden Änderung der Fahrsituation günstig, wie er z. B. bei Verlassen des Stadtverkehrs und Auffahrt auf eine Autobahn erfolgt. Insbesondere kann durch geeignete Wahl von Gewichtungsfaktoren beziehungsweise einer Anzahl maximal auszugebender Objektdatensätze für die Priorisierungskriterien ein Kriterium aus- oder eingeschaltet werden, beispielsweise indem der entsprechende Gewichtungsfaktor auf Null gesetzt wird.

Zur Veränderung der Ausgabereihenfolge während des Verfahrens ist es bevorzugt, daß wenigstens eine Eingabe in bezug auf wenigstens ein zu verwendendes Priorisierungskriterium zu vorgegebenen Zeiten abgefragt wird, wobei die Eingabe bevorzugt wenigstens einen der Priorisierungsparameter, bei dem Verfahren nach der ersten Alternative insbesondere die Auswahl eines Priorisierungskriteriums, umfaßt. Entsprechend der eingelesenen Eingabe wird dann das Verfahren fortgesetzt, so daß bei der nächsten Ausgabe die Reihenfolge anhand der aktuellen Priorisierungsparameter der aktuellen Auswahl erfolgt. Insbesondere kann die Eingabe in regelmäßigen Abständen abgefragt werden.

Besonders bevorzugt ist es jedoch, daß wenigstens eine Eingabe in bezug auf wenigstens ein zu verwendendes Priorisierungskriterium auf den Empfang eines Signals hin abgefragt wird. Dies ermöglicht es insbesondere, daß eine Datenverarbeitungseinrichtung, der die ausgegebenen Objektdatensätze zugeführt werden, eine Änderung der Ausgabereihenfolge herbeiführen kann. Dies hat insbesondere den Vorteil, daß die die Fahrsituation bewirkende Einrichtung die Ausgabereihenfolge selbst bestimmen kann.

Bevorzugt wird die Ausgabereihenfolge und/oder die maximale Gesamtzahl auszugebender Objektdatensätze in Abhängigkeit von Eigenschaften des Sensors oder erkannter Objekte situations- und/oder gefährdungsadaptiv festgelegt. Dies ist insbesondere dann vorteilhaft, wenn der Sensor an einem Fahrzeug befestigt ist, dessen Position und Bewegung dann wesentliche Eigenschaften des Sensors sind. Dies hat den Vorteil, daß eine Bewertung in bezug auf die Ausgabereihenfolge außerhalb der Datenverarbeitungseinrichtung, die die ausgegebenen Objektdatensätze einliest, erfolgen kann, was insbesondere bei schnellen Wechseln der Fahrsituation vorteilhaft ist.

Besonders bevorzugt kann hierzu wenigstens einer der Priorisierungsparameter, bei dem Verfahren nach der ersten Alternative insbesondere die Auswahl eines Priorisierungskriteriums, situations- und/oder gefährdungsadaptiv verändert werden. Es kann also beispielsweise die Gewichtung der für die entsprechenden Priorisierungskriterien ausgegebenen Anzahlen von Objektdatensätzen oder auch die Gesamtzahl der ausgegebenen Datensätze situations- und/oder gefährdungsadaptiv verändert werden. Insbesondere ist es möglich, bei Feststellen eines sich dem Sensor schnell nähernden Objekts nur noch ein Priorisierungskriterium zu berücksichtigen, das für mögliche Kollisionen besonders relevant ist.

Vorzugsweise kann bei der Adaption die Eigengeschwindigkeit des Sensors zur Erfassung elektromagnetischer Strahlung berücksichtigt werden. Befindet sich der Sensor zur Erfassung elektromagnetischer Strahlung in einem Fahrzeug, so kann die Eigengeschwindigkeit des Sensors über entsprechende, an dem Fahrzeug vorgesehene Sensoren bestimmt und eingelesen werden. Grundsätzlich ist es jedoch auch möglich, die Eigengeschwindigkeit des Sensors zur Erfassung elektromagnetischer Strahlung anhand als stationär erkannter Objekte aus der Objekterkennung und -verfolgung zu bestimmen.

Weiterhin kann bevorzugt bei der Adaption der Abstand und/oder die Geschwindigkeit des dem Sensors nächsten und/oder des relativ zu dem Sensor schnellsten Objekts berücksichtigt werden. Anhand dieser Daten läßt sich vergleichsweise einfach ein Gefährdungspotential für eine Kollision feststellen, so daß eine entsprechende Adaption der Ausgabereihenfolge ausgelöst werden kann.

Bevorzugt wird für wenigstens eines der Prioritätskriterien eine laufend aktualisierte Liste geführt, die zu einem gegebenen Zeitpunkt zumindest die entsprechend dem Priorisierungskriterium jeweils als nächstes auszugebenden Objektdatensätze, besonders bevorzugt in ihrer nach dem Priorisierungskriterium bestimmten Rangfolge, enthält. Dies ist insbesondere dann vorteilhaft, wenn bei einer Ausgabe Objektdatensätze ausgegeben werden sollen, die verschiedenen Priorisierungskriterien entsprechen.

Im Hinblick auf die verwendeten Priorisierungskriterien ist es bevorzugt, daß bei wenigstens einem der Priorisierungskriterien eine Güte der Objektdatensätze berücksichtigt wird. Als Maß für die Güte eines Objektdatensatzes bzw. für die Erkennung eines Objekts kann insbesondere die Anzahl der Bildpunkte verwendet werden, die bei der Objekterkennung und -verfolgung als dem Objekt zugehörig erkannt wurden.

Dabei ist es besonders bevorzugt, daß jedem Objekt als Eigenschaft eine Größe, beispielsweise eine Längs- und Querausdehnung, zugeordnet ist, und daß bei der Ermittlung der Güte die Anzahl der verwendeten Bildpunkte mit der theoretisch maximal möglichen Anzahl von Bildpunkten für das Objekt in der gegebenen Entfernung zu der tatsächlich gefundenen Anzahl von Bildpunkten in Beziehung gesetzt wird.

Weiterhin kann zur Bestimmung der Güte die Distanz des Objekts von dem Sensor einbezogen werden, da entfernte Objekte in der Regel weniger Bildpunkte aufweisen als nahe und daher weniger genau erkannt werden.

Insbesondere kann die Güte zusammen mit anderen Eigenschaften zu einem Kriterium kombiniert werden, beispielsweise in der Form, daß nur Objektdatensätze für eine Ausgabe berücksichtigt werden, die eine gewisse, durch das Verhältnis der Anzahl erfaßter Bildpunkte zu der möglichen Anzahl von Bildpunkten gegebene Güte aufweisen, die einen entsprechenden Schwellwert übersteigt.

Das Verfahren kann im Zusammenhang mit einem Objekterkennungs- und -verfolgungsverfahren angewendet werden, bei dem bei einer Iteration für Segmente mit benachbarten Bildpunkten, die keinem bis dahin erkannten, existierenden Objekt zugeordnet werden können, Hypothesen für neue diese Segmente enthaltende Objekte aufgestellt und verfolgt werden. Jeder Hypothese wird dabei eine Wahrscheinlichkeit zugeordnet, mit der die Hypothese zutrifft. Ein solches Verfahren ist in der am gleichen Tage wie die vorliegende Anmeldung eingereichten deutschen Patentanmeldung der Anmelderin der vorliegenden Anmeldung mit dem Titel "Verfahren zur Erkennung und Verfolgung von Objekten" und dem anwaltlichen Aktenzeichen S7873 DE 10 148 063.7 beschrieben, deren Inhalt durch Bezugnahme in diese Anmeldung eingeschlossen wird. Bei der Ausgabe kann dann bevorzugt die Wahrscheinlichkeit als eigenes Priorisierungskriterium oder als Teil eines Priorisierungskriteriums verwendet werden. Im letzteren Fall können dann beispielsweise bei der Priorisierung nur Objekte, die keiner Hypothese zugeordnet sind, und Objekte der wahrscheinlichsten Hypothesen berücksichtigt werden.

Das erfindungsgemäße Verfahren kann unter Verwendung beliebiger geeigneter Sensoren erfolgen. Es können insbesondere Ultraschall- oder Radarsensoren verwendet werden.

Bevorzugt wird das erfindungsgemäße Verfahren mit Sensoren für elektromagnetische Strahlung zur Erfassung tiefenaufgelöster Bilder verwendet. Unter einem tiefenaufgelösten Bild eines Sensors für elektromagnetische Strahlung wird ein Menge von bei einer Abtastung des eines Sichtbereichs des Sensors erfaßten Bildpunkten verstanden, denen Punkte bzw. je nach Auflösung des Sensors auch Bereiche eines von dem Sensor erfaßten Gegenstands entsprechen, wobei den Bildpunkten der Lage der zugehörigen Gegenstandspunkte entsprechende Koordinaten in wenigstens zwei Dimensionen zugeordnet sind, die nicht beide senkrecht zur Blickrichtung des Sensors stehen. Die Bildpunkte können weiterhin Daten über weitere, insbesondere optische, Eigenschaften der Gegenstandspunkte, beispielsweise deren Reflektivität, enthalten. Diese Daten werden im folgenden als optische Eigenschaften der Bildpunkte bezeichnet.

Sensoren für elektromagnetische Strahlung zur Erfassung solcher tiefenaufgelösten Bilder sind grundsätzlich bekannt. Bei diesen kann es sich bevorzugt um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Kameras aufgenommenen Rohdaten in tiefenaufgelöste Bilder aufweisen.

Vorzugsweise werden jedoch Laserscanner verwendet, die bei einer Abtastung einen Sichtbereich mit mindestens einem gepulsten Strahlungsbündel abtasten, das einen vorgegebenen Winkelbereich überstreicht und von einem Punkt bzw. Bereich eines Gegenstands, meist diffus, reflektierte Strahlungspulse des Strahlungsbündels detektieren. Dabei wird zur Entfernungsmessung die Laufzeit der ausgesandten, reflektierten und detektierten Strahlungspulse erfaßt. Die so erfaßten Rohdaten für einen Bildpunkt können dann als Koordinaten den Winkel, unter dem der Reflex erfaßt wurde, und die aus der Laufzeit der Strahlungspulse bestimmte Entfernung des Gegenstandspunkts enthalten. Bei der Strahlung kann es sich insbesondere um sichtbares oder infrarotes Licht handeln.

Solche optoelektronischen Sensoren eignen sich daher insbesondere für die einleitend geschilderten Anwendungen im Fahrzeugbereich.

Die erfindungsgemäße Verwendung von Priorisierungsgrößen und Wertebereichen für diese kann bei allen Alternativen des Verfahrens erfindungsgemäß verwendet werden.

Weiterer Gegenstand der Erfindung ist ein Computerprogramm mit Programmcode-Mitteln, um das erfindungsgemäße Verfahren durchzuführen, wenn das Programm auf einem Computer ausgeführt wird.

Weiterhin ist Gegenstand der Erfindung ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Weiterer Gegenstand der Erfindung ist ein Verfahren zur Erkennung und Verfolgung von Gegenständen in einem Sichtbereich wenigstens eines Sensors, vorzugsweise eines Sensors für elektromagnetische Strahlung, insbesondere eines Laserscanners, bei dem mit dem Sensor zeitlich aufeinanderfolgende, bevorzugt tiefenaufgelöste Bilder wenigstens eines Teils seines Sichtbereichs erfaßt werden, und bei dem die erfaßten Bilder mit dem erfindungsgemäßen Verfahren zur Erkennung und Verfolgung von Objekten verarbeitet werden.

Weiterhin ist Gegenstand der Erfindung eine Vorrichtung zur Erkennung und Verfolgen von Objekten mit einem Sensor zur Erfassung elektromagnetischer Strahlung, bevorzugt einem optoelektronischen Sensor, insbesondere einem Laserscanner, bevorzugt zur Bestimmung der Lage von Objekten und einer mit dem optoelektronischen Sensor verbundenen Datenverarbeitungseinrichtung, die zur Durchführung des erfindungsgemäßen Verfahrens ausgebildet ist. Die Datenverarbeitungseinrichtung kann insbesondere einen Prozessor und einen damit verbundenen Speicher sowie mit dem Prozessor und/oder Speicher verbundene Ein- und Ausgabeschnittstellen aufweisen, wobei in dem Speicher ein erfindungsgemäßes Computerprogramm zur Ausführung mit dem Prozessor gespeichert ist.

Bevorzugte Ausführungsformen der Erfindung werden nun beispielhaft anhand der Zeichnungen beschrieben. Es zeigen:

Fig. 1 eine schematische Darstellung eines Kraftfahrzeugs mit einem Laserscanner auf einer Autobahn im Kolonnenverkehr und

Fig. 2 das Kraftfahrzeug von Fig. 1 auf einer Landstraße bei einer Überholsituation.

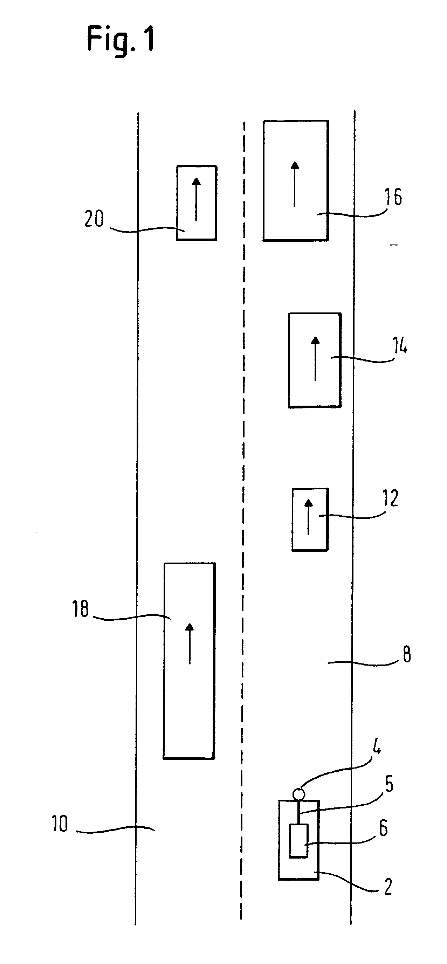

In Fig. 1 weist ein Kraftfahrzeug 2 einen Laserscanner 4 zur Erfassung tiefenaufgelöster Bilder des vor dem Kraftfahrzeug liegenden Bereichs und eine mit dem Laserscanner 4 über eine Datenverbindung 5 verbundene Datenverarbeitungsvorrichtung 6 auf. Das Kraftfahrzeug 2 bewegt sich auf einer Autobahn, von der in Fig. 1 nur die beiden Fahrstreifen 8 und 10 gezeigt sind, auf denen sich neben dem Kraftfahrzeug 2 in gleicher Fahrtrichtung weitere Fahrzeuge 12, 14, 16, 18 und 20 bewegen, was in Fig. 1 durch die entsprechenden Pfeile angedeutet ist.

Der Laserscanner 4 ist an der Frontseite des Kraftfahrzeugs 2 angebracht und erfaßt zumindest bei der gezeigten Anordnung an dem Kraftfahrzeug 2 einen in Fahrtrichtung liegenden Sichtbereich von 180°, in dem sich die Fahrzeuge 12, 14, 16, 18 und 20 befinden. Bei jeder Abtastung des Sichtbereichs werden tiefenaufgelöste Bilder des Sichtbereichs 22 und der darin sichtbaren Gegenstände erfaßt, die für eine Objekterkennung und - verfolgung verwendet werden. Bei dem Objekterkennungs- und - verfolgungsverfahren kann es sich hierbei um ein grundsätzlich bekanntes Verfahren handeln, soweit die eigentliche Objekterkennung und - verfolgung betroffen ist. Bei einem solchen Verfahren werden in den Bildern, idealerweise den Gegenständen entsprechende, Objekte erkannt und verfolgt. Dabei können sowohl stationäre als auch bewegliche Objekte erkannt werden, wobei jedoch zur Erläuterung des erfindungsgemäßen Verfahrens in den Ausführungsbeispielen nur bewegliche Objekte betrachtet werden.

Bei der Objekterkennung und -verfolgung werden für jedes Objekt Objektdatensätze von einer in Fig. 1 nicht explizit gezeigten Auswerteeinrichtung des Laserscanners 4 berechnet, die beispielsweise die Lage der Objekte, ihre Geschwindigkeit und einen Objekttyp umfassen. Diese Objektdatensätze werden an die Datenverarbeitungseinrichtung 6 des Kraftfahrzeugs 2 ausgegeben, die sie dazu benutzt, die Fahrsituation zu bewerten und gegebenenfalls entsprechende Maßnahmen wie z. B. eine Warnung an den Fahrer oder auch eine Steuerung des Kraftfahrzeugs 2 auszulösen. Für jeweils eine Abtastung werden Objektdatensätze über die Datenverbindung 5 an die Datenverarbeitungseinrichtung 6 übertragen.

Hierbei wird eine vorgegebene, maximale Gesamtanzahl von Objektdatensätzen in einer bestimmten Ausgabereihenfolge übertragen. Zur Festlegung der maximalen Anzahl und der Ausgabereihenfolge sendet die Datenverarbeitungseinrichtung 6 bei Bedarf, das heißt, wenn sie erkannt hat, daß eine Änderung der Ausgabereihenfolge notwendig ist, ein Signal an die in den Figuren nicht gezeigte Auswerteeinrichtung des Laserscanners 4, die daraufhin entsprechende Parameter von der Datenverarbeitungseinrichtung 6 einliest und, soweit erforderlich, in Priorisierungsparameter umsetzt.

Bei dem ersten Ausführungsbeispiel wird eine vorgegebene maximale Gesamtanzahl von Objektdatensätzen ausgegeben, die zwei Priorisierungskriterien entsprechen. Dabei ist für jedes der Priorisierungskriterien ein Gewichtungsfaktor und schließlich eine maximale Gesamtzahl auszugebender Objektdatensätze vorgesehen, aus denen die maximale Anzahl der für das jeweilige Priorisierungskriterium auszugebenden Objektdatensätze durch Multiplikation bestimmbar ist. Weiterhin ist eine Rangfolge zwischen den beiden Priorisierungskriterien vorgesehen, so daß zuerst Objektdatensätze, die nach dem in der Rangfolge ersten Priorisierungskriterium auszugeben sind, und dann erst die nach dem anderen Priorisierungskriterium auszugebenden Objektdatensätze ausgegeben werden. Die Priorisierungsparameter umfassen daher die maximale Gesamtzahl auszugebender Objekte, die Gewichtungsfaktoren und die Rangfolge.

Die Objektdatensätze werden dann in Blöcken ausgegeben, die den Priorisierungskriterien entsprechen, wobei innerhalb eines Blocks die Objektdatensätze in einer durch das Priorisierungskriterium festgelegten Reihenfolge ausgegeben werden.

Um die Rangfolge der Priorisierungskriterien bestimmen zu können, ist jedem der vorgegebenen Kriterien eine Kennzeichnung, in dem Ausführungsbeispiel eine Zahl, zugeordnet, mittels derer es identifizierbar ist.

Zur Änderung der Ausgabereihenfolge liest bei Empfang eines Signals der Laserscanner 2 beziehungsweise dessen in den Figuren nicht gezeigte Auswerteeinrichtung zunächst die Anzahl der Priorisierungskriterien, die bei der Ausgabe verwendet werden sollen, dann deren Kennzeichnungen in der vorgegebenen Rangfolge, für jedes der Priorisierungskriterien einen Gewichtungsfaktor und schließlich eine maximale Gesamtzahl auszugebender Objektdatensätze ein. Über die maximale Gesamtanzahl von auszugebenden Objektdatensätzen und die Gewichtungsfaktoren wird dann unter Rundung die Maximalzahl der für das entsprechende Priorisierungskriterium auszugebenden Objektdatensätze berechnet.

Bei dem ersten Ausführungsbeispiel werden als Priorisierungskriterien zum einen die Distanz eines Objekts von dem Laserscanner 4 sowie die Zeit bis zur Kollision (Time-To-Collision, TTC) verwendet. Bei beiden Kriterien erhält ein Objektdatensatz eine höhere Priorität, wenn die Distanz, beziehungsweise die Zeit bis zur Kollision kleiner als die eines anderen Objektdatensatzes ist.

Bei der in Fig. 1 dargestellten Fahrsituation, bei der sich alle Fahrzeuge in gleicher Richtung bewegen und darüber hinaus auch typischerweise ähnliche Geschwindigkeiten haben, könnte die Ausgabereihenfolge also durch folgende von dem Laserscanner eingelesene Eingabe bestimmt sein, wobei dem Kriterium der Distanz als Kennzeichen die Ziffer 1 und dem Kriterium der Zeit bis zu einer Kollision als Kennzeichen die Ziffer 2 zugeordnet ist:

Zunächst wird eine "2" für die Anzahl der zu berücksichtigenden Priorisierungskriterien eingelesen, dann eine "1", die angibt, daß das sich auf die Distanz beziehende Priorisierungskriterium in der Rangfolge höher steht als das durch Einlesen einer "2" gegebene Priorisierungskriterium der Zeit bis zum Aufprall. Daraufhin wird die Zahl "0,6" als Gewichtungsfaktor für das in der Rangfolge erste Priorisierungskriterium und dann die Zahl "0,4" als Gewichtsfaktor für das zweite Priorisierungskriterium eingelesen. Schließlich wird als Gesamtzahl der auszugebenden Objekte die Zahl "10" eingelesen. Damit ergibt sich, daß bei einer Ausgabe zunächst maximal 0,6 von 10, das heißt 6 Objektdatensätze ausgegeben werden, die entsprechend ihrer Distanz von dem Laserscanner 4 geordnet sind, also dem Priorisierungskriterium 1 entsprechen. Als nächstes werden 0,4 von 10, d. h. vier Objektdatensätze entsprechend ihrer Zeit bis zum Aufprall, das heißt dem zweiten Priorisierungskriterium, ausgegeben.

Hierzu wird nach jeder Abtastung und Durchführung der Objekterkennung und -verfolgung sowohl die Distanz als auch die Zeit bis zur nächsten Kollision bestimmt. Bei Verwendung eines Laserscanners ist hierbei unmittelbar die radiale Distanz als Meßgröße verfügbar, während die Zeit bis zum Aufprall aus der Distanz und der aus der Objektverfolgung bekannten Relativgeschwindigkeit zwischen einem Objekt und dem Laserscanner 4 zu berechnen ist. Wird festgestellt, daß eine Kollision nicht möglich ist, kann ein sehr großer Wert ausgegeben werden, der anzeigt, daß eine Kollision nicht möglich ist.

Die eingelesenen Eingaben und damit die Parameter für die Ausgabereihenfolge werden bis zur Erkennung eines Signals der Datenverarbeitungseinrichtung 6 in der in den Figuren nicht gezeigten Auswerteeinrichtung des Laserscanners 4 gespeichert und bei den Ausgaben folgender Abtastungen berücksichtigt.

Zur Ausgabe werden die Objektdatensätze in bezug auf ihre Distanz vom Sensor zumindest soweit sortiert, daß die sechs Objektdatensätze mit kleinster Distanz in Reihenfolge aufsteigender Distanz geordnet sind und ausgegeben werden. Danach geschieht gleiches für die vier auszugebenden Objektdatensätze für das Priorisierungskriterium der TTC.

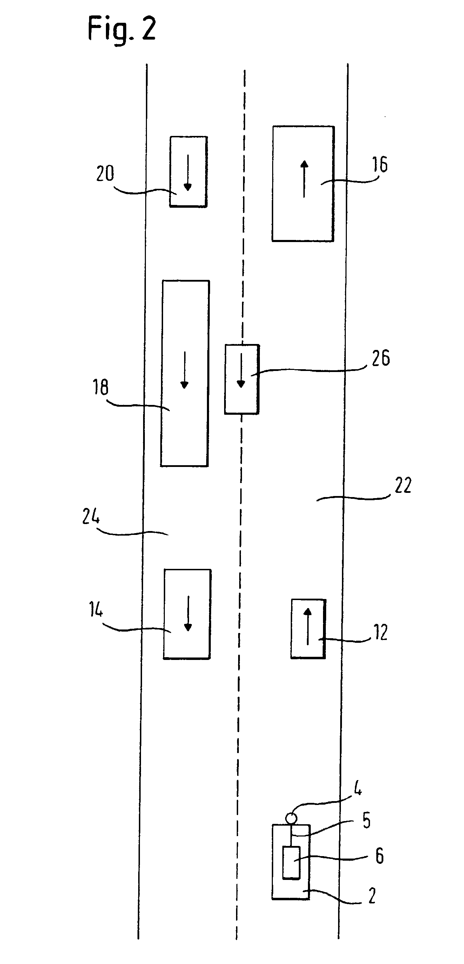

In Fig. 2 ist eine andere Fahrsituation dargestellt, wobei Gegenständen, die denen in Fig. 1 entsprechen, die gleichen Bezugszeichen zugeordnet sind. Das Kraftfahrzeug 2 und die anderen Fahrzeuge 12, 14, 16, 18 und 20 bewegen sich nun auf einer Landstraße mit Gegenverkehr, wobei sich die Fahrzeuge 2, 12 und 16 mit gleicher Fahrtrichtung auf einem rechten Fahrstreifen 22 bewegen und ihnen auf der Gegenfahrbahn 24 in entgegenkommender Richtung die Fahrzeuge 14, 18 und 20 sowie ein weiteres Fahrzeug 26, das bei einem Überholvorgang beide Fahrstreifen benutzt, entgegenkommen. Bei einer solchen Fahrsituation treten wesentlich größere Relativgeschwindigkeiten zwischen dem Kraftfahrzeug 2 und den Fahrzeugen auf der Gegenfahrbahn auf, so daß die Zeit bis zum Aufprall eine wesentlich größere Rolle spielt als der Abstand des Laserscanners 4 beziehungsweise des Fahrzeugs 2 von anderen Objekten. Bei einem Wechsel von einer Autobahn auf eine Landstraße, der von der Datenverarbeitungseinrichtung 6 beispielsweise anhand einer Überwachung des Lenkwinkels und der Geschwindigkeit des Kraftfahrzeugs 2 erkannt werden kann, sendet daher die Datenverarbeitungseinrichtung 6 ein Signal an den Laserscanner 4, der daraufhin zur Festlegung einer neuen Ausgabereihenfolge zum Beispiel folgende Daten einliest: eine "2" zur Festlegung, daß zwei Priorisierungskriterien verwendet werden, sodann eine "2", die anzeigt, daß die Zeit bis zum Aufprall als Priorisierungskriterium in der Rangfolge höher steht als das durch die danach eingelesene "1" als zweites Priorisierungskriterium bestimmte Kriterium der Distanz, dann einen Gewichtungsfaktor von "0,8" für das erste Priorisierungskriterium und einen Gewichtungsfaktor von "0,2" für das zweite Priorisierungskriterium sowie eine "12" für die maximale Gesamtzahl von auszugebenden Objektdatensätzen. Die Erkennung der Fahrsituation kann bei einer anderen Ausführungsform auch dadurch erfolgen, daß, z. B. anhand ortsfester Objekte am Fahrbahnrand und gegebenenfalls Objekten auf der Fahrbahn, mittels eines geeigneten Algorithmus ein Fahrbahntyp festgestellt wird, der als Indikator für die Fahrsituation verwendet wird. Weiter ist es möglich, hierzu andere Datenquellen, beispielsweise ein GPS (Global Positioning System) mit digitaler Karte zu verwenden.

Nach Berechnung der Reihenfolge der Objektdatensätze für jedes Priorisierungskriterium werden dann zunächst maximal 0,8 von 12, das heißt bei entsprechender Rundung zehn, Objektdatensätze gemäß dem in der Rangfolge der Priorisierungskriterien nun ersten Priorisierungskriterium der TTC ausgegeben. Da weniger als 8 Objekte erfaßt und verfolgt wurden, werden dementsprechend auch nur weniger Objekte ausgegeben. Daraufhin werden die 0,2 von 12, das heißt nach Rundung 2, Objektdatensätze im Hinblick auf das in der Rangfolge nun zweite Kriterium der Distanz ausgegeben.

Bei einem zweiten Ausführungsbeispiel werden die gleichen Priorisierungskriterien wie bei dem ersten Ausführungsbeispiel verwendet. Jedoch wird jeweils einer der Gewichtungsfaktoren auf 1 und der andere dementsprechend auf 0 gesetzt, so daß durch Änderung der Gewichtungsfaktoren beispielsweise von 0 und 1 auf 1 und 0 ein Wechsel zwischen einzelnen Priorisierungskriterien erfolgt. Soweit dies als einzige Betriebsart für die Ausgabe vorgesehen ist, kann die Eingabe dahingehend vereinfacht werden, daß nur noch die Kennzeichnung des zu verwendenden Priorisierungskriteriums und gegebenenfalls die maximale Gesamtanzahl auszugebender Objektdatensätze eingelesen wird.

Bei einem dritten Ausführungsbeispiel werden die gleichen Priorisierungskriterien wie bei dem ersten Ausführungsbeispiel verwendet. Jedoch werden für die vorhandenen Priorisierungskriterien jeweils zu Beginn des Verfahrens fest vorgegebene maximale Anzahlen von Objektdatensätzen ausgegeben. Hierzu ist vorgesehen, daß während des gesamten Verfahrens für jedes der Priorisierungskriterien eine entsprechend dem jeweiligen Priorisierungskriterium geordnete Liste von Objektdatensätzen geführt wird, so daß bei einer Ausgabe jeweils nur die Anzahl von Objektdatensätzen einer Liste ausgegeben werden muß, die der Anzahl der für dieses Priorisierungskriterium auszugebenden Objektdatensätze entspricht. Genauer gesagt: es wird eine Liste mit Objektdatensätzen geführt, die jeweils in einer Reihenfolge aufsteigender Distanz geordnet die maximale Anzahl auszugebender Objektdatensätze für das Priorisierungskriterium der kleinsten Distanz zum Laserscanner 4 enthält, und es wird eine weitere Liste geführt, die jeweils in einer Reihenfolge aufsteigender TTC geordnet die maximale Anzahl auszugebender Objektdatensätze für das Priorisierungskriterium kleinster TTC enthält.

Bei einem vierten Ausführungsbeispiel der Erfindung werden die gleichen Priorisierungskriterien wie bei dem ersten Ausführungsbeispiel verwendet. Jedoch wird unabhängig von den Signalen der Datenverarbeitungseinrichtung 6 die Ausgabereihenfolge der Objektdatensätze entsprechend der Fahrsituation adaptiv verändert. Hierzu kann es beispielsweise vorgesehen sein, daß die maximale Relativgeschwindigkeit der erfaßten Objekte zu dem Laserscanner 4 bestimmt wird und bei Überschreiten eines gewissen Maximalwertes für die Geschwindigkeit durch mindestens ein Objekt von einer Ausgabereihenfolge, wie sie beispielsweise in der ersten Fahrsituation gewählt war und bei der keine sehr großen Geschwindigkeitsunterschiede beziehungsweise Relativgeschwindigkeiten auftreten sollten, zu einer Ausgabereihenfolge, die der zweiten Fahrsituation entspricht, gewechselt wird. Für jede der Fahrsituationen sind dazu in der in den Figuren nicht gezeigten Auswerteeinrichtung des Laserscanners 4 Priorisierungsparametersätze, die denen für die ersten beiden Fahrsituationen entsprechen und zu Beginn des Verfahrens festgelegt wurden, gespeichert. Als aktueller Priorisierungsparametersatz wird dann nur der entsprechende der gespeicherten Priorisierungsparametersätze ausgewählt.

Dies erlaubt eine schnelle Reaktion auf einen Wechsel der Fahrsituation unabhängig von einem Signal der Datenverarbeitungseinrichtung 6.

In einem weiteren Ausführungsbeispiel nach einer bevorzugten Ausführungsform der Erfindung werden von dem Anwender eingegebene Priorisierungsparameter für die beiden Priorisierungskriterien für die Priorisierungsgrößen TTC und radiale Distanz, z. B. 0,6 und 0,8, eingelesen. Weiterhin werden Priorisierungsparameter zur Normierung für TTC und die radiale Distanz eingelesen.

Danach werden die vorliegenden Objektdatensätze aller Objekte einer Abtastung priorisiert nach TTC und auf einen ersten Priorisierungswert X zwischen 0 und 1 normiert, indem die Objektdatensätze in aufsteigender Reihenfolge geordnet werden und ihnen Priorisierungswerte X zugewiesen werden, die sich als Differenz zwischen 1 und dem Verhältnis des TTC-Wertes zu dem maximalen TTC-Wert ergeben, wenn die TTC-'Werte unterhalb des maximalen TTC-Wertes liegen und sonst auf Null gesetzt werden.

Entsprechend werden die Objektdatensätze aller Objekte nach dem Priorisierungskriterium der radialen Distanz priorisiert und unter Verwendung des maximalen Wertes der radialen Distanz auf einen Wert zwischen 0 und 1 normiert, wobei sich jeweils ein zweiter Priorisierungswert Y ergibt.

Für jedes der Objekte wird nun ein kombinierter Priorisierungswert Z als mit den Priorisierungsparametern gewichteter Mittelwert der beiden Priorisierungswerte ermittelt:

$$Z = 0,6*X + 0,8*Y / (0,6+0,8)$$

Die Objektdatensätze werden entsprechend der kombinierten Priorisierungswerte Z priorisiert, so daß sich eine Gesamtliste ergibt, die ausgegeben wird.

Durch Setzen des Priorisierungsparameters für TTC auf 1 und aller anderen Priorisierungsparameter auf 0 wird eine reine TTC-Liste erstellt.

Bei einem weiteren Verfahren nach einer bevorzugten Ausführungsform der Erfindung werden von dem Anwender eingegebene Priorisierungsparameter zur Auswahl zweier Priorisierungskriterien und deren Reihenfolge, beispielsweise der beiden Priorisierungskriterien TTC und radiale Distanz in dieser Reihenfolge, eingelesen.

Die Objektdatensätze aller vorliegenden Objekte einer Abtastung werden dann wie in dem vorhergehenden Beispiel nach dem ersten Priorisierungskriterium für TTC priorisiert, wobei sich eine erste Liste mit Priorisierungswerten X ergibt.

Dann werden die Objektdatensätze aller vorliegenden Objekte einer Abtastung wie in dem vorhergehenden Beispiel nach dem zweiten Priorisierungskriterium der radialen Distanz priorisiert, wobei sich eine zweite Liste mit Priorisierungswerten Y ergibt.

Für jeden Objektdatensatz wird nun eine getrennte Bewertung für die Priorisierungskriterien TTC und radiale Distanz erstellt, wobei die Bewertung analog zu der Einzelbewertung erfolgt.

Es ergeben sich zwei neue Listen, in denen die Objektdatensätze als erstes ausgegeben werden, die in beiden Einzellisten eine hohe Priorität einnehmen, danach die Objektdatensätze, die bei dem Priorisierungskriterium TTC einen hohen Werte erhalten haben und danach die Objektdatensätze, die bei dem Priorisierungskriterium radiale Distanz einen hohen Wert erhalten haben. Für jeden Objektdatensatz wird zusätzlich die Position aus beiden Listen angegeben.

**Bezugszeichenliste**

| 2 | Kraftfahrzeug |
|---|---|
| 4 | Laserscanner |
| 5 | Datenverbindung |
| 6 | Datenverarbeitungseinrichtung |
| 8 | rechter Fahrbahnstreifen |
| 10 | linker Fahrbahnstreifen |
| 12 | Fahrzeug |
| 14 | Fahrzeug |
| 16 | Fahrzeug |
| 18 | Fahrzeug |
| 20 | Fahrzeug |
| 22 | rechter Fahrstreifen |
| 24 | Fahrstreifen in Gegenrichtung |
| 26 | Fahrzeug |

**Patentansprüche**

1. Verfahren zur Erkennung und Verfolgung von Objekten auf der Basis von Bildern von Gegenständen (12, 14, 16, 18, 20, 26) in einem Sichtbereich wenigstens eines, insbesondere an einem Fahrzeug (2) angeordneten Sensors, vorzugsweise eines Sensors zur Erfassung elektromagnetischer Strahlung, insbesondere eines Laserscanners (4), bei dem den Objekten zugeordnete Objektdatensätze an eine Datenverarbeitungs- und/oder Speichereinrichtung ausgegeben werden,
**dadurch gekennzeichnet,**
**daß** in Abhängigkeit von mindestens zwei Priorisierungskriterien, die jeweils mindestens eine Eigenschaft der Objekte betreffen, und von mehreren Priorisierungsparametern Objektdatensätze, die wenigstens einem der Priorisierungskriterien entsprechen, ausgegeben werden,
wobei Priorisierungsparameter benutzt werden, die eine maximale Gesamtzahl der auszugebenden Objektdatensätze und zumindest für ein Priorisierungskriterium einen Gewichtungsfaktor umfassen, aus denen für jedes der Priorisierungskriterien eine maximale Anzahl der bei der Ausgabe auszugebenden dem jeweiligen Priorisierungskriterium entsprechenden Objektdatensätze ermittelbar sind.

2. Verfahren zur Erkennung und Verfolgung von Objekten auf der Basis von Bildern von Gegenständen (12, 14, 16, 18, 20, 26) in einem Sichtbereich wenigstens eines, insbesondere an einem Fahrzeug (2) angeordneten Sensors, vorzugsweise eines Sensors zur Erfassung elektromagnetischer Strahlung, insbesondere eines Laserscanners (4), bei dem den Objekten zugeordnete Objektdatensätze an eine Datenverarbeitungs- und/oder Speichereinrichtung ausgegeben werden,

**dadurch gekennzeichnet,**

**daß** in Abhängigkeit von mindestens zwei Priorisierungskriterien, die jeweils mindestens eine Eigenschaft der Objekte betreffen, und von einem oder mehreren Priorisierungsparametern Objektdatensätze, die wenigstens einem der Priorisierungskriterien entsprechen, ausgegeben werden, wobei für jedes der Priorisierungskriterien eine entsprechend dem jeweiligen Priorisierungskriterium geordnete Liste von Objektdatensätzen geführt und für jedes der Priorisierungskriterien eine vorgegebene maximale Anzahl der bei der Ausgabe auszugebenden dem jeweiligen Priorisierungskriterium entsprechenden Objektdatensätze ausgegeben wird.

3. Verfahren nach einem der vorhergehenden Ansprüche,

   **dadurch gekennzeichnet,**

   **daß** ein Objektdatensatz, der gemäß mindestens zwei der Priorisierungskriterien auszugeben wäre, nur einmal ausgegeben wird.

4. Verfahren nach einem der vorhergehenden Ansprüche,

   **dadurch gekennzeichnet,**

   **daß** einem auszugebenden Objektdatensatz mindestens ein Datenelement zugeordnet wird, das ebenfalls ausgegeben wird und das Priorisierungskriterium oder die Priorisierungskriterien kennzeichnet, nach dem bzw. denen der Objektdatensatz auszugeben ist.

5. Verfahren nach einem der vorhergehenden Ansprüche,

   **dadurch gekennzeichnet,**

   **daß** die Objektdatensätze in einer Ausgabereihenfolge ausgegeben werden, die von dem oder den Priorisierungskriterien abhängt.

6. Verfahren nach einem der vorhergehenden Ansprüche,

   **dadurch gekennzeichnet,**

   **daß** durch wenigstens einen Priorisierungsparameter den Priorisierungskriterien eine Rangfolge zugeordnet ist und daß bei einer Ausgabe in der Rangfolge der Priorisierungskriterien für jedes des Priorisierungskriterien die entsprechenden Objektdatensätze ausgegeben werden.

7. Verfahren nach einem der vorhergehenden Ansprüche,

   **dadurch gekennzeichnet,**

   **daß** bei einer Ausgabe die Objektdatensätze in Blöcken ausgegeben werden, die jeweils Objektdatensätze enthalten, die gemäß den verschiedenen Priorisierungskriterien die gleiche Priorität bei der Ausgabe haben.

8. Verfahren zur Erkennung und Verfolgung von Objekten auf der Basis von Bildern von Gegenständen (12, 14, 16, 18, 20, 26) in einem Sichtbereich wenigstens eines, insbesondere an einem Fahrzeug (2) angeordneten Sensors, vorzugsweise eines Sensors zur Erfassung elektromagnetischer Strahlung, insbesondere eines Laserscanners (4), bei dem den Objekten zugeordnete Objektdatensätze an eine Datenverarbeitungs- und/oder Speichereinrichtung ausgegeben werden,

   **dadurch gekennzeichnet,**

   **daß** mindestens zwei Priorisierungskriterien vorgesehen sind, die jeweils mindestens eine aus Eigenschaften der Objekte ermittelbare Priorisierungsgröße betreffen,

   **daß** für jedes der Priorisierungskriterien wenigstens ein Priorisierungsparameter zur Normierung vorgesehen ist, der einen Grenzwert eines Wertebereichs für die Priorisierungsgröße angibt,

   **daß** für jedes der Priorisierungskriterien die Objektdatensätze priorisiert werden und jedem der Objektdatensätze in Abhängigkeit von dem Wert der Priorisierungsgröße ein Priorisierungswert zugeordnet wird, wobei die Priorisierungswerte von Objektdatensätzen bezüglich eines Priorisierungskriteriums, deren Werte der entsprechenden Priorisierungsgrößen in dem Wertebereich liegen, entsprechend dem Priorisierungskriterium auf Werte zwischen 0 und einer für alle Priorisierungskriterien gleich gewählten Konstante normiert werden, und den anderen Objektdatensätzen ein Priorisierungswert von 0 zugeordnet wird,

   **daß** für jeden Objektdatensatz ein kombinierter Priorisierungswert, in den durch mindestens einen Priorisierungsparameter gewichtete Priorisierungwerte für die Priorisierungskriterien eingehen, bevorzugt als mit mindestens einem Priorisierungsparameter gewichteter Mittelwert der Priorisierungwerte für die Priorisierungskriterien, ermittelt wird, und

   **daß** bis zu einer maximalen Gesamtanzahl auszugebender Objektdatensätze die Objektdatensätze entsprechend dem kombinierten Priorisierungswert ausgegeben werden.

9. Verfahren zur Erkennung und Verfolgung von Objekten auf der Basis von Bildern von Gegenständen (12, 14, 16, 18, 20, 26) in einem Sichtbereich wenigstens eines, insbesondere an einem Fahrzeug (2) angeordneten Sensors, vorzugsweise eines Sensors zur Erfassung elektromagnetischer Strahlung, insbesondere eines Laserscanners (4), bei dem den Objekten zugeordnete Objektdatensätze an eine Datenverarbeitungs- und/oder Speichereinrichtung ausgegeben werden,

**dadurch gekennzeichnet,**

**daß** mindestens zwei Priorisierungskriterien vorgesehen sind, die jeweils mindestens eine Eigenschaft der Objektdatensätze betreffen, daß die Objektdatensätze nach jedem der Priorisierungskriterien unter Bildung entsprechender Priorisierungswerte priorisiert werden,

**daß** für jeden Objektdatensatz eine getrennte Bewertung für jedes der Priorisierungskriterien erfolgt, und für jedes Priorisierungskriterium eine entsprechende Liste erstellt wird, und

**daß** bis zu einer maximalen Gesamtanzahl auszugebender Objektdatensätze die Objektdatensätze als erstes ausgegeben werden, die in jeder der Listen eine hohe Priorität einnehmen, und danach in einer durch Parametrisierungsparamter vorgegebenen Reihenfolge der Priorisierungskriterien für jedes der Priorisierungskriterien die noch nicht ausgegebenen Objektdatensätze, die bezüglich des jeweiligen Priorisierungskriteriums einen hohen Wert erhalten haben.

10. Verfahren nach Anspruch 9,
**dadurch gekennzeichnet,**
**daß** für jeden Objektdatensatz die Position in den Listen ausgegeben wird.

11. Verfahren nach Anspruch 9 oder 10,
**dadurch gekennzeichnet,**
**daß** für jedes der Priorisierungskriterien wenigstens ein Priorisierungsparameter zur Normierung vorgesehen ist, der einen Grenzwert eines Wertebereichs für die Priorisierungsgröße angibt,

**daß** zur Bewertung für eines der Priorisierungskriterien jedem der Objektdatensätze in Abhängigkeit von dem Wert der entsprechenden Priorisierungsgröße ein Priorisierungswert zugeordnet wird, wobei die Priorisierungswerte von Objektdatensätzen bezüglich eines Priorisierungskriteriums, deren Werte der entsprechenden Priorisierungsgrößen in dem Wertebereich liegen, entsprechend dem Priorisierungskriterium auf Werte zwischen 0 und einer für alle Priorisierungskriterien gleich gewählten Konstante normiert werden, und

den anderen Objektdatensätzen ein Priorisierungswert von 0 zugeordnet wird, und

**daß** nur Objektdatensätze mit einem Priorisierungswert oberhalb eines durch einen weiteren Priorisierungsparameter gegebenen Schwellwerts ausgegeben werden.

12. Verfahren nach einem der vorhergehenden Ansprüche,
**dadurch gekennzeichnet,**
**daß** wenigstens einer der Priorisierungsparameter während des Ablaufs des Verfahrens geändert wird.

13. Verfahren nach Anspruch 12,

**dadurch gekennzeichnet,**

**daß** wenigstens eine Eingabe in bezug auf wenigstens ein zu verwendendes Priorisierungskriterium zu vorgegebenen Zeiten abgefragt wird, wobei die Eingabe bevorzugt wenigstens einen der Priorisierungsparameter umfaßt.

14. Verfahren nach Anspruch 12 oder 13,
**dadurch gekennzeichnet,**
**daß** wenigstens eine Eingabe in bezug auf wenigstens ein zu verwendendes Priorisierungskriterium auf den Empfang eines Signals hin abgefragt wird, wobei die Eingabe bevorzugt wenigstens einen der Priorisierungsparameter umfaßt.

15. Verfahren nach einem der vorhergehenden Ansprüche,
**dadurch gekennzeichnet,**
**daß** die Ausgabereihenfolge und/oder die maximale Gesamtanzahl auszugebender Objekte in Abhängigkeit von Eigenschaften des Sensors (4) oder erkannter Objekte situations- und/oder gefährdungsadaptiv festgelegt wird.

16. Verfahren nach Anspruch 15,
**dadurch gekennzeichnet,**
**daß** bei der Adaption die Eigengeschwindigkeit des optoelektronischen Sensors (4) berücksichtigt wird.

17. Verfahren nach Anspruch 15 oder 16,
**dadurchgekennzeichnet,**
**daß** bei der Adaption der Abstand und/oder die Geschwindigkeit des dem optoelektronischen Sensor (4) nächsten und/oder des relativ zu dem optoelektronischen Sensor (4) schnellsten Objekts berücksichtigt wird.

18. Verfahren nach einem der vorhergehenden Ansprüche,
**dadurch gekennzeichnet,**
**daß** für wenigstens eines der Priorisierungskriterien eine laufend aktualisierte Liste geführt wird, die zu einem gegebenen Zeitpunkt zumindest die entsprechend dem Priorisierungskriterium jeweils als nächstes auszugebenden Objektdatensätze enthält.

19. Verfahren nach einem der vorhergehenden Ansprüche,
**dadurch gekennzeichnet,**
**daß** bei wenigstens einem der Priorisierungskriterien eine Güte der Objektdatensätze berücksichtigt wird.

20. Computerprogramm mit Programmcode-Mitteln, um die Verfahren nach einem der Ansprüche 1 bis 19 durchzuführen, wenn das Programm auf einem Computer ausgeführt wird.

21. Computerprogrammprodukt mit Programmcode-Mitteln, die auf einem computerlesbaren Datenträger gespeichert sind, um das Verfahren nach einem der Ansprüche 1 bis 19 durchzuführen, wenn das Computerprogrammprodukt auf einem Computer ausgeführt wird.

22. Vorrichtung zur Erkennung und Verfolgen von Objekten mit
einem Sensor (4) zur Erfassung elektromagnetischer Strahlung, insbesondere Laserscanner, zur Bestimmung der Lage von Objekten und
einer mit dem Sensor (4) verbundenen Datenverarbeitungseinrichtung, die zur Durchführung des Verfahrens nach einem der Ansprüche 1 bis 19 ausgebildet ist.

**Claims**

1. A method for the recognition and tracking of objects on the basis of images of real objects (12, 14, 16, 18, 20, 26) in a visual range of at least one sensor, in particular of a sensor arranged at a vehicle (2), preferably of a sensor for the detection of electromagnetic radiation, in particular of a laser scanner (4), wherein object data sets associated with the objects are output to a data processing device and/or storage device,
**characterised in that**,
in dependence on at least two prioritisation criteria which each relate to at least one property of the objects and on a plurality of prioritisation parameters, object data sets corresponding to at least one of the prioritisation criteria are output,
wherein prioritisation parameters are used which comprise a maximum total number of the object data sets to be output and one weighting factor at least for a prioritisation criterion from which a maximum number of the object data sets to be output on the output and corresponding to the respective prioritisation criterion can be determined for each of the prioritisation criteria.

2. A method for the recognition and tracking of objects on the basis of images of real objects (12, 14, 16, 18, 20, 26) in a visual range of at least one sensor, in particular of a sensor arranged at a vehicle (2), preferably of a sensor for the detection of electromagnetic radiation, in particular of a laser scanner (4), wherein object data sets associated with the objects are output to a data processing device and/or storage device,
**characterised in that**, in dependence on at least two prioritisation criteria which each relate to at least one property of the objects and on one or more prioritisation parameters, object data sets corresponding to at least one of the prioritisation criteria are output,
wherein, for each of the prioritisation criteria, a list of object data sets is kept which is arranged in accordance with the respective prioritisation criterion and, for each of the prioritisation criteria, a predetermined maximum number of the object data sets to be output on the output and corresponding to the respective prioritisation criterion is output.

3. A method in accordance with any one of the preceding claims,
**characterised in that** an object data set which would have to be output in accordance with at least two of the prioritisation criteria is only output once.

4. A method in accordance with any one of the preceding claims,
**characterised in that** at least one data element is associated with an object data set to be output, is likewise output and characterises the prioritisation criterion or the prioritisation criteria according to which the object data set is to be output.

5. A method in accordance with any one of the preceding claims,
**characterised in that** the object data sets are output in an output order which depends on the prioritisation criterion or criteria.

6. A method in accordance with any one of the preceding claims,
**characterised in that** a ranking order is associated with the prioritisation criteria by at least one prioritisation parameter; and **in that**, on an output in the ranking order of the prioritising criteria, the corresponding object data sets are output for each of the prioritisation criteria.

7. A method in accordance with any one of the preceding claims,
**characterised in that**, on an output, the object data sets are output in blocks which each contain object data sets which have the same priority on the output in accordance with the different prioritisation criteria.

8. A method for the recognition and tracking of objects on the basis of images of real objects (12, 14, 16, 18, 20, 26) in a visual range of at least one sensor, in particular of a sensor arranged at a vehicle (2), preferably of a sensor for the detection of electromagnetic radiation, in particular of a laser scanner (4), wherein object data sets associated with the objects are output to a data processing device and/or storage device,
**characterised in that**
at least two prioritisation criteria are provided which each relate to at least one prioritisation factor which can be determined from properties of the objects;

**in that**, for each of the prioritisation criteria, at least one prioritisation parameter is provided for the standardisation which provides a limit value of a value range for the prioritisation factor; **in that** the object data sets are prioritised for each of the prioritisation criteria and a prioritisation value is associated with each of the object data sets in dependence on the value of the prioritisation factor, wherein the prioritisation values of object data sets, with respect to a prioritisation criterion, of which the values of the corresponding prioritisation factors lie in the value range, are standardised in accordance with the prioritisation criterion to values between 0 and a constant selected to be the same for all prioritisation criteria and a prioritisation value of 0 is associated with the other object data sets; **in that**, for each object data set, a combined prioritisation value is determined into which prioritisation values for the prioritisation criteria weighted by at least one prioritisation parameter are taken, preferably as a mean value of the prioritisation values for the prioritisation criteria weighted by at least one prioritisation parameter; and **in that** the object data sets are output in accordance with the combined prioritisation value up to a maximum total number of object data sets to be output.

9. A method for the recognition and tracking of objects on the basis of images of real objects (12, 14, 16, 18, 20, 26) in a visual range of at least one sensor, in particular of a sensor arranged at a vehicle (2), preferably of a sensor for the detection of electromagnetic radiation, in particular of a laser scanner (4), wherein object data sets associated with the objects are output to a data processing device and/or storage device, **characterised in that** at least two prioritisation criteria are provided which each relate to at least one property of the object data sets; **in that** the object data sets are prioritised in accordance with each of the prioritisation criteria while forming corresponding prioritisation values; **in that** a separate evaluation for each of the prioritisation criteria takes place for each object data set; and **in that** a corresponding list is prepared for each prioritisation criterion; and **in that**, up to a maximum total number of object data sets to be output, those object data sets are output first which adopt a high priority in each of the lists and thereafter, in an order of the prioritisation criteria predetermined by prioritisation parameters for each of the prioritisation criteria, the object data sets are output which have not yet been output and which have received a high value with respect to the respective prioritsiation criterion.

10. A method in accordance with claim 9, **characterised in that** the position in the lists is output for each data object set.

11. A method in accordance with claim 9 or claim 10, **characterised in that**, for each of the prioritisation criteria, at least one prioritisation parameter is provided for the standardisation which provides a limit value of a value range for the prioritisation factor; **in that** a prioritisation value is associated with each of the object data sets in dependence on the value or the corresponding prioritisation factor for the evaluation for one of the prioritisation criteria, wherein the prioritisation values of object data sets, with respect to a prioritisation criterion, of which the values of the corresponding prioritisation factors lie in the value range, are standardised in accordance with the prioritisation criterion to values between 0 and a constant selected to be the same for all prioritisation criteria and a prioritisation value of 0 is associated with the other object data sets; and **in that** only object data sets with a prioritisation value above a threshold value given by a further prioritisation parameter are output.

12. A method in accordance with any one of the preceding claims, **characterised in that** at least one of the prioritisation parameters is changed during the procedure of the method.

13. A method in accordance with claim 12, **characterised in that** at least one input is queried at preset times with respect to at least one prioritisation criterion to be used, with the input preferably comprising at least one of the prioritisation parameters.

14. A method in accordance with claim 12 or claim 13, **characterised in that** at least one input is queried in response to the reception of a signal with respect to at least one prioritisation criterion to be used, with the input preferably comprising at least one of the prioritisation parameters.

15. A method in accordance with any one of the preceding claims, **characterised in that** the output order and/or the maximum total number of objects to be output is/are determined in dependence on properties of the sensor (4) or of recognised objects in situation-adaptive and/or risk-adaptive manner.

16. A method in accordance with claim 15, **characterised in that** the inherent speed of the optoelectronic sensor (4) is taken into account in the adaptation.

17. A method in accordance with claim 15 o r claim 16, **characterised in that** the spacing and/or the speed of the object closest to the optoelectronic sensor (4) and/or of the fastest object relative to the optoelectronic sensor (4) is/are taken into account in the adaptation.

**18.** A method in accordance with any one of the preceding claims, **characterised in that**, for at least one of the prioritisation criteria, a constantly updating list is kept which contains at least the object data sets to be respectively output next in accordance with the prioritisation criterion at a given point in time.

**19.** A method in accordance with any one of the preceding claims, **characterised in that** a quality of the object data sets is taken into account with at least one of the prioritisation criteria.

**20.** A computer program with program code means to carry out the method in accordance with any one of the claims 1 to 19, when the program is carried out on a computer.

**21.** A computer program product with program code means which are stored on a computer legible data carrier to carry out the method in accordance with any one of the claims 1 to 19, when the computer program product is carried out on a computer.

**22.** An apparatus for the recognition and tracking of objects comprising a sensor (4) for the detection of electromagnetic radiation, in particular a laser scanner, for the determination of the position of objects; and a data processing apparatus which is connected to the sensor (4) and is made to carry out the method in accordance with any one of the claims 1 to 19.

**Revendications**

**1.** Procédé de reconnaissance et de suivi d'objets à base d'images de sujets (12, 14, 16, 18, 20, 26) dans une zone de vision d'au moins un capteur agencé en particulier sur un véhicule (2), en particulier d'un capteur pour la détection de rayonnement électromagnétique, en particulier d'un scanner à laser (4) dans lequel des jeux de données d'objet associés aux objets sont fournis à un système de traitement de données et/ou de mémorisation,
**caractérisé en ce que**
en fonction d'au moins deux critères de priorisation qui concernent chacun au moins une propriété des objets, et en fonction de plusieurs paramètres de priorisation, des jeux de données d'objets, qui correspondent au moins à l'un des critères de priorisation, sont fournis,
dans lequel on utilise des paramètres de priorisation qui comprennent un nombre total maximum de jeux de données d'objet à fournir et au moins pour un critère de priorisation un facteur de pondération, parmi lesquels on peut déterminer pour chacun des critères de priorisation un nombre maximum de jeux de données d'objet correspondant au critère de priorisation respectif à fournir lors de la fourniture.

**2.** Procédé de reconnaissance et de suivi d'objets à base d'images de sujets (12, 14, 16, 18, 20, 26) dans une zone de vision d'au moins un capteur agencé en particulier sur un véhicule (2), en particulier d'un capteur pour la détection de rayonnement électromagnétique, en particulier d'un scanner à laser (4) dans lequel des jeux de données d'objet associés aux objets sont fournis à un système de traitement de données et/ou de mémorisation,
**caractérisé en ce que**
en fonction d'au moins deux critères de priorisation qui concernent chacun au moins une propriété des objets, et en fonction d'un ou de plusieurs paramètres de priorisation, des jeux de données d'objets, qui correspondent au moins à l'un des critères de priorisation, sont fournis,
dans lequel pour chacun des critères de priorisation est tenue une liste de jeux de données d'objets, classée selon le critère de priorisation respectif et pour chacun des critères de priorisation est fourni un nombre maximum prédéterminé des jeux de données à fournir lors la fourniture et correspondant au critère de priorisation respectif.

**3.** Procédé selon l'une des revendications précédentes,
**caractérisé en ce que**
un jeu de données d'objet, qui devrait être fourni selon au moins deux des critères de priorisation, n'est fourni qu'une seule fois.

**4.** Procédé selon l'une des revendications précédentes,
**caractérisé en ce que**
à un jeu de données d'objet à fournir est associé au moins un élément de données qui est également fourni et qui caractérise le critère de priorisation ou les critères de priorisation selon lequel ou lesquels le jeu de données d'objet doit être fourni.

**5.** Procédé selon l'une des revendications précédentes,
**caractérisé en ce que**
les jeux de données d'objet sont fournis dans un ordre de fourniture qui dépend du ou des critères de priorisation.

**6.** Procédé selon l'une des revendications précédentes,
**caractérisé en ce que**
par au moins un paramètre de priorisation, une hiérarchie est associée aux critères de priorisation et **en ce qu'**en cas d'une fourniture dans la hiérarchie des critères de priorisation pour chacun des critères de priorisation sont fournis les jeux de données d'objet correspondants.

**7.** Procédé selon l'une des revendications précédentes,
**caractérisé en ce que**
en cas de fourniture, les jeux de données d'objet sont fournis en blocs qui contiennent chacun des jeux de données d'objet qui, selon les différents critères de priorisation, ont la même priorité lors de la fourniture.

8. Procédé de reconnaissance et de suivi d'objets à base d'images de sujets (12, 14, 16, 18, 20, 26) dans une zone de vision d'au moins un capteur agencé en particulier sur un véhicule (2), en particulier d'un capteur pour la détection de rayonnement électromagnétique, en particulier d'un scanner à laser (4) dans lequel des jeux de données d'objet associés aux objets sont fournis à un système de traitement de données et/ou de mémorisation,
**caractérisé en ce que**
il est prévu au moins deux critères de priorisation qui concernent chacun au moins une grandeur de priorisation déterminable à partir de propriétés des objets,
**en ce que** pour chacun des critères de priorisation est prévu au moins un paramètre de priorisation pour la normalisation, lequel indique une valeur limite d'une plage de valeur pour la grandeur de priorisation,
**en ce que** pour chacun des critères de priorisation, les jeux de données d'objet sont priorisés et un critère de priorisation est associé à chacun des jeux de données d'objet en fonction de la valeur de la grandeur de priorisation, les valeurs de priorisation de jeux de données d'objet étant normalisées en référence à un critère de priorisation dont les valeurs des grandeurs de priorisation correspondantes sont situées dans la plage de valeurs, selon le critère de priorisation à des valeurs entre 0 et une constante choisie équivalente pour tous les critères de priorisation, et aux autres jeux de données d'objet est associée une valeur de priorisation de 0,
**en ce que** pour chaque jeu de données d'objet est déterminée une valeur de priorisation combinée dans laquelle interviennent des valeurs de priorisation pour les critères de priorisation, lesquelles sont pondérées par au moins un paramètre de priorisation, de préférence sous forme de valeur moyenne des valeurs de priorisation pour les critères de priorisation, laquelle est pondérée par au moins un paramètre de priorisation, et
**en ce que** jusqu'à un nombre total maximum de jeux de données d'objet à fournir, les jeux de données d'objet sont fournis selon la valeur de priorisation combinée.

9. Procédé de reconnaissance et de suivi d'objets à base d'images de sujets (12, 14, 16, 18, 20, 26) dans une zone de vision d'au moins un capteur agencé en particulier sur un véhicule (2), en particulier d'un capteur pour la détection de rayonnement électromagnétique, en particulier d'un scanner à laser (4) dans lequel des jeux de données d'objet associés aux objets sont fournis à un système de traitement de données et/ou de mémorisation,
**caractérisé en ce que**
il est prévu au moins deux critères de priorisation qui concernent chacun au moins une propriété des jeux de données d'objet,
**en ce que** les jeux de données d'objet sont priorisés d'après chacun des critères de priorisation en formant des valeurs de priorisation correspondantes,
**en ce que** pour chaque jeu de données d'objet, une évaluation séparée a lieu pour chacun des critères de priorisation,
et pour chaque critère de priorisation est établie une liste correspondante, et
**en ce que** jusqu'à un nombre total maximum de jeux de données d'objet, les jeux de données d'objet qui sont fournis en premiers sont ceux qui, dans chacune des listes, occupent une priorité élevée et ensuite, dans un ordre prédéterminé par des paramètres de priorisation, des critères de priorisation pour chacun des critères de priorisation, ce sont les jeux de données d'objet non encore fournis qui ont reçu une valeur élevée en référence au critère de priorisation respectif.

10. Procédé selon la revendication 9,
**caractérisé en ce que**
pour chaque jeu de données d'objet, la position est fournie dans les listes.

11. Procédé selon la revendication 9 ou 10,
**caractérisé en ce que**
pour chacun des critères de priorisation, au moins un paramètre de priorisation est prévu pour la normalisation qui indique une valeur limite d'une plage de valeurs pour la grandeur de priorisation,
**en ce que** pour évaluer un des critères de priorisation, il est associé à chacun des jeux de données d'objet une valeur de priorisation en fonction de la valeur de la grandeur de priorisation correspondante, les valeurs de priorisation de jeux de données d'objet étant normalisées par référence à un critère de priorisation dont les valeurs des grandeurs de priorisation correspondantes sont situées dans la plage de valeurs, selon le critère de priorisation à des valeurs entre 0 et une constante choisie équivalente pour tous les critères de priorisation, et aux autres jeux de données d'objet est associée une valeur de priorisation de 0, et
**en ce que** seuls sont fournis des jeux de données d'objet avec valeur de priorisation supérieure à une valeur seuil donnée par un autre paramètre de priorisation.

12. Procédé selon l'une des revendications précédentes,
**caractérisé en ce que**
au moins un des paramètres de priorisation est modifié pendant le déroulement du procédé.

13. Procédé selon la revendication 12,
**caractérisé en ce que**
au moins une entrée concernant au moins un critère de priorisation à utiliser est questionnée à des temps prédéterminés, l'entrée comprenant de préférence au moins un des paramètres de priorisation.

14. Procédé selon la revendication 12 ou 13,
**caractérisé en ce que**
au moins une entrée concernant au moins un critère de priorisation à utiliser est questionnée quant à la réception d'un signal, l'entrée comprenant de préférence au moins un des paramètres de priorisation.

15. Procédé selon l'une des revendications précédentes,
**caractérisé en ce que**
l'ordre de fourniture et/ou le nombre total maximum d'objets à fournir est défini de manière adaptative à la situation et/ou au risque en fonction de propriétés du capteur (4) ou d'objets reconnus du capteur (4) ou d'objets reconnus.

16. Procédé selon la revendication 15,
**caractérisé en ce que**
lors de l'adaptation, on tient compte de la vitesse propre du capteur (4) optoélectronique.

17. Procédé selon la revendication 15 ou 16,
**caractérisé en ce que**
lors de l'adaptation, on tient compte de la distance et/ou de la vitesse de l'objet le plus proche du capteur (4) optoélectronique et/ou de l'objet le plus rapide par rapport au capteur (4) optoélectronique.

18. Procédé selon l'une des revendications précédentes,
**caractérisé en ce que**
pour au moins un des critères de priorisation est tenue une liste actualisée de façon continue qui contient à un instant donné au moins les jeux de données d'objet à fournir respectivement à la suite selon le critère de priorisation.

19. Procédé selon l'une des revendications précédentes,
**caractérisé en ce que**
dans le cas d'au moins un des critères de priorisation, on tient compte d'une qualité des jeux de données d'objet.

20. Programme d'ordinateur avec moyens de code de programme pour mettre en oeuvre le procédé selon l'une des revendications 1 à 19 lorsque le programme est exécuté sur un ordinateur.

21. Produit de programme d'ordinateur avec moyens de code de programme qui sont mémorisés sur un support de données lisible par ordinateur pour mettre en oeuvre le procédé selon l'une des revendications 1 à 19 lorsque le produit de programme est réalisé sur un ordinateur.

22. Dispositif de reconnaissance et de suivi d'objets, comportant un capteur (4) pour détecter un rayonnement électromagnétique, en particulier un scanner au laser, pour déterminer la position d'objets, et un système de traitement de données relié au capteur (4) et réalisé pour mettre en oeuvre le procédé selon l'une des revendications 1 à 19.

# Fig. 1

# Fig. 2